# EUROPÄISCHE PATENTSCHRIFT

(11) **EP 3 884 743 B1**
(45) Veröffentlichungstag und Bekanntmachung des Hinweises auf die Patenterteilung: **30.08.2023**
(21) Anmeldenummer: 21401013.4
(22) Anmeldetag: 15.03.2021
(51) Int. Cl.: A01B 3/42, A01B 15/14

(54) **ANBAUDREHPFLUG**
MOUNTED REVERSIBLE PLOUGH
CHARRUE RÉVERSIBLE PORTÉE

(30) Priorität: 27.03.2020 DE 102020108472
(43) Veröffentlichungstag der Anmeldung: 29.09.2021
(73) Patentinhaber: Amazonen-Werke H. Dreyer GmbH & Co. KG, 49205 Hasbergen-Gaste (DE)
(72) Erfinder: Wilken, Martin, 26131 Oldenburg (DE); Rehnen, Pascal, 49328 Melle (DE); Prangemeier, Dominik, 49549 Ladbergen (DE)

(56) Entgegenhaltungen:
- EP-A1- 3 427 559
- EP-A2- 1 252 806
- AT-A2- 502 772
- DE-A1-102012 021 721
- DE-A1-102017 116 592

## Beschreibung

Die Erfindung betrifft einen Anbaudrehpflug gemäß dem Oberbegriff des Patentanspruches 1.

Ein derartiger Anbaudrehpflug ist in EP 3 427 559 A1 beschrieben. Dieser Pflug weist an seinem vorderen Ende einen Anbaubock zum Anbau an eine Zugmaschine, einen Pflugrahmen, der um eine liegende Wendeachse drehbar ist mit daran schwenkbar angeordneten Pflugkörpern, wobei die Pflugkörper durch einen Schnittbreitenaktor in ihrer Arbeitsbreite in einstellbarer Weise verschwenkbar sind und eine Wendekonsole auf. Der Pflugrahmen ist an der Wendekonsole, die um die liegende Wendeachse drehbar am Anbaubock gelagert ist, um eine quer zur Wendeachse angeordnete Einschwenkachse einschwenkbar gelagert. Für den Wendevorgang ist der Pflugrahmen durch einen Einschwenkaktor um die Einschwenkachse einschwenkbar, so dass der Anbaudrehpflug in der Wendestellung eine verringerte Querausladung aufweist. Um beim Einschwenken und beim Wendevorgang Beschädigungen am Pflug beispielsweise durch Selbstkollision verschwenkter Komponenten zu verhindern, ist der Einschwenkaktor mittels einer Rahmenschwenksteuerung für verschiedene Voreinstellungen, wie Schnitt- bzw. Arbeitsbreite, Vorderfurchenbreite sowie Zugpunkt, in verschiedene Hubstellungen zum Erreichen der Wendestellung steuerbar.

Die Rahmenschwenksteuerung umfasst bei diesem Anbaudrehpflug eine als Sperrventil ausgeführte Begrenzungseinrichtung zum Anfahren und Halten der Wendestellung. Das Sperrventil wird in Abhängigkeit einer erfassten Schwenkstellung des Pflugrahmens relativ zur Wendekonsole bezüglich der Einschwenkachse geschaltet, so dass der als Druckmittelaktor ausgebildete Einschwenkaktor in der jeweils gewünschten Wendestellung gehalten wird. Die Erfassung der Schwenkstellung des Pflugrahmens gestaltet sich allerdings sehr aufwändig und unterliegt einer Vielzahl von Störeinflüssen. So ist die Erfassung in einem Bauraum des Anbaudrehpfluges vorzunehmen, in dem, insbesondere während des Einschwenkens, eine Mehrzahl relativ zueinander bewegter Komponenten angeordnet ist. Gattungsgemäße Anbaudrehpflüge weisen beispielsweise regelmäßig ein Einstellzentrum zwischen Wendekonsole und Pflugrahmen auf, welches in aufwändiger und kostspieliger Weise um eine derartige Erfassungseinrichtung zu ergänzen wäre. Die Erfassung der Schwenkstellung des Pflugrahmens erscheint somit aus konstruktiver Sicht nachteilig.

Die Erfassung der Schwenkstellung des Pflugrahmens weist außerdem die Schwierigkeit auf, dass diese verschiedenen systembedingten Störeinflüssen unterliegt. So wird der längliche Pflugrahmen, dessen Stabilität im Wesentlichen für den Einsatz in Arbeitsstellung ausgelegt ist, während des Wendevorgangs um 180 Grad gedreht. Während der Drehung ist der Pflugrahmen nicht abgestützt und durchläuft einen Bereich, insbesondere bei Drehung um etwa 90 Grad, in dem er im Wesentlichen Belastungen senkrecht zur Arbeitsstellung erfährt. Der Pflugrahmen ist in dieser Belastungsrichtung regelmäßig nicht biegesteif ausgeführt, da solche Belastungen in Arbeitsstellung nicht auftreten, so dass der Pflugrahmen mit steigendem Abstand zur Wendekonsole einem vergrößerten Biegemoment unterliegt infolgedessen er sich während der Drehung ständig elastisch verformt. Der Pflugrahmen weist aufgrund der Verformung über seine Länge während der Drehung unterschiedliche und sich ständig ändernde Schwenkstellungen zur Wendekonsole auf, was dazu führt, dass bei diesem Anbaudrehpflug das Sperrventil nicht zuverlässig schließt. Viel mehr besteht die Gefahr, dass das Ventil ständig öffnet und wieder schließt und so einen pulsierenden Ölfluss erzeugt, welcher schädlich für weitere Ventile und Dichtungen ist. Außerdem besteht infolge dieser Unzulänglichkeit die Gefahr, dass der Einschwenkaktor über die Wendestellung hinausfährt und es so zur Selbstkollision kommt. Die Wendestellung kann anhand dieser Erfassungseinrichtung somit nicht zuverlässig angefahren und gehalten werden.

In DE 10 2017 116 592 A1 ist ein Anbaudrehpflug mit einer Parallelverstelleinrichtung für den Pflugrahmen und einer Winkelverstelleinrichtung für den Pflugrahmen offenbart. Die Winkelverstelleinrichtung ist dazu eingerichtet, den Pflugrahmen in seiner Ausrichtung gegenüber dem Anbaubock zu verstellen.

Aus der EP 1 252 806 A2 ist ein Pflug mit Schnittbreiteneinstellung bekannt, welche eine Sollwert-Regelung für den Schnittbreitenaktor umfasst.

Die DE 10 2012 021 721 A1 offenbart einen Anbaudrehpflug bei dem die Begrenzungseinrichtung der Rahmenschwenksteuerung als als Begrenzungsanschlag dienender Zuglenker ausgeführt ist.

Ein Wendepflug mit einer hydraulischen Folgesteuereinrichtung, um beim Wenden zunächst ein Stützrad anzuheben, den Pflug zu wenden und das Stützrad so dann wieder abzulassen, ist aus AT 502 772 A2 bekannt.

Die der Erfindung zugrunde liegende Aufgabe besteht somit darin, die Rahmenschwenksteuerung und insbesondere die Erfassungseinrichtung weiterzubilden und Nachteile des Standes der Technik zu vermeiden. Insbesondere soll das Anfahren und Halten der Wendestellung zuverlässig ermöglicht werden.

Diese Aufgabe wird erfindungsgemäß gelöst durch einen Anbaudrehpflug gemäß den Merkmalen des Anspruchs 1. Vorteilhafte Weiterbildungen der Erfindung sind Gegenstand der abhängigen Unteransprüche.

Erfindungsgemäß ist vorgesehen, die Wendestellung nicht mehr anhand der Erfassung der Schwenkstellung des Pflugrahmen anzufahren und zu halten, sondern den Hubstellweg des Einschwenkaktors in Abhängigkeit der erfassten Hubstellung des Schnittbreitenaktors mittels der Begrenzungseinrichtung auf die Hubstellung für die Wendestellung zu begrenzen. Der erfindungsgemäße Anbaudrehpflug ist vorteilhaft, da eine Erfassungseinrichtung zum Erfassen der Hubstellung des Schnittbreitenaktors, welche Teil Rahmenschwenksteuerung ist, sehr einfach und robust ausführbar ist. Durch die Erfassung der Hubstellung des Schnittbreitenaktors können systembedingte Störeinflüsse, wie sie bei Abnahme der Schwenkstellung am Pflugrahmen auftreten, vermieden werden und ferner ist die Ansteuerung der Begrenzungseinrichtung vereinfacht. Der Schnittbreitenaktor ist funktionsbedingt störungsrobust ausgeführt und erlaubt eine einfache und zuverlässige Erfassung seiner Hubstellung. Durch die Erfassung der Hubstellung des Schnittbreitenaktors kann der Einschwenaktor für verschiedene Voreinstellungen in verschiedene Hubstellungen gesteuert werden, so dass auf die Berücksichtigung weiterer Abhängigkeiten verzichtet werden kann. Die Erfindung macht sich die Erkenntnis zunutze, dass die Erfassung der Hubstellung des Schnittbreitenaktors die vorbekannten Nachteile vermeidet, um den Anbaudrehpflug, insbesondere den Pflugrahmen, zuverlässig zwischen der Arbeitsstellung und der Wendestellung zu verbringen.

In einer vorteilhaften Weiterbildung der Erfindung ist vorgesehen, dass die Begrenzungseinrichtung hydraulisch ausgebildet ist. Vorzugsweise ist zumindest der Einschwenkaktor in dieser Weiterbildung als Druckmittelaktor ausgebildet, so dass eine besonders einfache Interaktion zwischen Begrenzungseinrichtung und Einschwenkaktor ermöglicht ist.

Der erfindungsgemäße Anbaudrehpflug bei dem der Einschwenkaktor und der Schnittbreitenaktor als Druckmittelaktoren ausgebildet sind ist ferner vorteilhaft dadurch weitergebildet, dass die Begrenzungseinrichtung und/oder die Erfassungseinrichtung eine hydraulische Kopplungsvorrichtung umfasst, wobei die Kopplungsvorrichtung zumindest eine Druckmittelkammer des Schnittbreitenaktors mit zumindest einer Druckmittelkammer des Einschwenkaktors fluidleitend verbindet. Infolge dieser Maßnahme ist die Begrenzung des Einschwenkaktors und/oder Erfassung der Hubstellung des Schnittbreitenaktors in zweckmäßiger Weise über die verdrängten Ölmengen ermöglicht.

In einer besonders vorteilhaften Ausführungsform dieser Weiterbildung ist vorgesehen, dass der Einschwenkaktor als Memoryzylinder ausgeführt ist und einen Memorykolben aufweist, der eine Druckmittelkammer des Einschwenkaktors in zwei separate Druckmittelkammern unterteilt, wobei die Kopplungsvorrichtung die Druckmittelkammer des Schnittbreitenaktors mit der dem Kolben des Einschwenkaktors abgewandten Druckmittelkammer der zwei separaten Druckmittelkammern in einer Master-Slave-Verschaltung verbindet. Vorzugsweise ist der Memorykolben auf der Stangenseite des Einschwenkaktors angeordnet und der Schnittbreitenaktor ist über die Kopplungsvorrichtung mit seiner kolbenseitigen Druckmittelkammer fluidleitend angeschlossen. Insbesondere weist der Einschwenkaktor zusätzliche Druckmittelanschlüsse für die durch den Memorykolben separierten Druckmittelkammern auf, so dass der Memorykolben unabhängig von den Hubbewegungen des Kolbens des Einschwenkaktors innerhalb des Einschwenkaktors verfahrbar ist. In dieser Weiterbildung bewirkt eine Verstellung der Arbeitsbreite, insbesondere zu kleiner Arbeitsbreite, eine Verschiebung des Memorykolbens in Richtung des Kolbens des Einschwenkaktors, so dass der Einschwenkaktor in seiner Hubstellung begrenzt ist. Vorzugsweise sind der Schnittbreitenaktor und der Einschwenkaktor derart verschaltet und zueinander ausgerichtet, dass eine Verstellung des Schnittbreitenaktors zu kleiner Arbeitsbreite eine Reduzierung des ausführbaren Gesamthubs des Einschwenkaktors bewirkt, so dass der Pflugrahmen weniger stark eingeschwenkt werden kann. Der Schnittbreitenaktor kann in entgegengesetzter Richtung verfahren werden indem der dem Kolben zugewandten Druckmittelkammer der zwei separaten Druckmittelkammern Druckmittel zugeleitet wird. Der Memorykolben bildet mit der Master-Slave-Verschaltung zum Schnittbreitenaktor somit sowohl die Erfassungs- als auch die Begrenzungseinrichtung aus.

Eine weitere vorteilhafte Ausführungsform des erfindungsgemäßen Anbaudrehpfluges, wobei zumindest der Einschwenkaktor als Druckmittelaktor ausgebildet ist und die Rahmenschwenksteuerung ein Sperrventil zum Absperren der Druckmittelversorgung des Einschwenkaktors umfasst, zeichnet sich dadurch aus, dass die Erfassungseinrichtung eine mechanische Kopplungsvorrichtung zwischen Schnittbreitenaktor und Einschwenkaktor umfasst, die an das Sperrventil angebunden ist und Hubbewegungen des Schnittbreitenaktors und des Einschwenkaktors in Ventilstellbewegungen umsetzt, insbesondere das Sperrventil bei Erreichen der gewünschten Wendestellung absperrt. Insbesondere kann infolge von Hubbewegungen des Schnittbreitenaktors die Ventillstellbewegung zur Einnahme der geschlossenen Stellung schon vor dem Wendevorgang teilweise oder vollständig ausgeführt sein. Im Falle, dass die Ventilstellbewegung zur Einnahme der geschlossenen Stellung nur teilweise umgesetzt wurde, kann die übrige Ventilstellbewegung beim Wendevorgang durch Hubbewegung des Einschwenkaktors umgesetzt werden, so dass der Hubstellweg des Einschwenkaktors in Abhängigkeit der erfassten Hubstellung des Schnittbreitenaktors auf die Hubstellung für die Wendestellung begrenzt ist. Falls das Sperrventil infolge der vom Schnittbreitenaktor umgesetzten Ventilstellbewegung bereits geschlossen ist, kann der Wendevorgang ohne Einschwenken ausgeführt werden.

In vorteilhafter Weiterbildung der vorstehenden Ausführungsform ist das Sperrventil bezüglich Hubbewegungen des Schnittbreitenaktors und des Einschwenkaktors ortsfest, vorzugsweise am Einschwenkaktor, angeordnet und die mechanische Kopplungsvorrichtung verbindet das Sperrventil mit der Zylinderkammer und/oder Kolbenstange des Schnittbreitenaktors und des Einschwenkaktors. In vorteilhafter Weise ist somit die direkte und übertragungsverlustfreie Umsetzung von Hubbewegungen des Einschwenkaktors und Schnittbreitenaktors ermöglicht.

In besonders vorteilhafter Weiterbildung einer der beiden vorstehenden Ausführungsformen des erfindungsgemäßen Anbaudrehpfluges ist vorgesehen, dass die mechanische Kopplungsvorrichtung einen Übertragungszug, insbesondere Bowdenzug, umfasst, dessen Seele einerseits an einem Ventilstellhebel und andererseits an der Kolbenstange des Schnittbreitenaktors angelenkt ist und dessen Anschlaghülsen einerseits an der Kolbenstange des Einschwenkaktors und andererseits an der Zylinderkammer des Schnittbreitenaktors angelenkt sind. Zwischen den Anschlaghülsen, welche auch Endkappe(n) genannt werden, kann sich ein Führungsschlauch in dem die Seele geführt ist erstrecken. Die Seele hat vorzugsweise hierbei eine vorgegebene Länge, welche größer ist als der Abstand zwischen den Anschlaghülsen, so dass die Seele den Anfang und das Ende des vorzugsweise als Bowdenzug ausgeführten Übertragungszuges bilden kann. Die Länge der Seele ist vorzugsweise so gewählt, dass Hubbewegungen des Schnittbreitenaktors direkt in Ventillstellbewegungen des Ventilstellhebels umgesetzt werden. Wirken auf den Anfang oder das Ende der Seele Druck- oder Zugkräfte führt dies dazu, dass sich die Seele relativ zu den Anschlaghülsen, insbesondere durch den Führungsschlauch verschiebt, so dass die Druck- oder Zugkräfte an das gegenüberliegende Ende des Übertragungs- bzw. Bowdenzugs übertragen werden. Durch die Befestigung der Seele einerseits an dem Ventilstellhebel und andererseits an der Kolbenstange des Schnittbreitenaktors ist so eine direkte Umsetzung der Hubbewegung des Schnittbreitenaktors an den Ventilstellhebel ermöglicht. Die Anschlaghülsen verändern bei Verschiebung ihrerseits ihre relative Lage zum jeweiligen Ende der Seele nicht, so dass die Anschlaghülse auf der Kolbenstange des Einschwenkaktors den ausführbaren Hub beim Einschwenken auf den, insbesondere verbleibenden, Ventilstellweg des Ventilhebels bis zur Einnahme der geschlossenen Ventilstellung begrenzt. Sollte der Schnittbreitenaktor keine Verschiebung der Seele bewirkt haben, steht dem Einschwenkaktor der volle Ventilstellweg zum Einschwenken zur Verfügung. Vorzugsweise ist der Ventilstellweg in diesem Fall so gewählt, dass er den maximalen Hub des Einschwenkaktors und/oder die Hubstellung zur Einnahme der Wendestellung aus der von der Wendestellung am maximal abweichenden Lage des Pflugrahmens ermöglicht. Vorzugsweise ist der Ventilstellweg so gewählt, dass er bei maximalem Hub des Schnittbreitenaktors überwunden ist, da bei minimaler Schnitt- bzw. Arbeitsbreite vorzugsweise kein Einschwenken notwendig ist.

Um den Wendevorgang effizient zu gestalten, ist in einer weiteren vorteilhaften Ausführungsform des erfindungsgemäßen Anbaudrehpfluges vorgesehen, dass bei erfassten Hubstellungen des Schnittbreitenaktors, die kleiner als ein vorbestimmter Schwellenwert sind, die Begrenzungseinrichtung den Hubstellweg des Einschwenkaktors nicht begrenzt, während bei erfassten Hubstellungen des Schnittbreitenaktors, die mit der gewünschten Wendestellung verknüpft oder größer bzw. gleich dem vorbestimmten Schwellenwert sind, die Begrenzungseinrichtung den Hubstellweg des Einschwenkaktors begrenzt und damit der Einschwenkaktor in der Wendestellung gehalten ist. Diese Weiterbildung macht sich ebenfalls die Erkenntnis der Erfindung zunutze und führt diese in vorteilhafter Weise fort, so dass je nach eingestellter Schnitt- bzw. Arbeitsbreite nur ein teilweises Einschwenken oder kein Einschwenken mehr erforderlich bzw. die gewünschte Wendestellung schon vorerreicht ist und schneller oder direkt gewendet werden kann. Mit anderen Worten: Der für den Einschwenkvorgang dem Einschwenkaktor freigegebene Hubweg steht in direkter und ausschließlicher Relation zum genutzten Hub des Schnittbreitenaktors.

In einer vorteilhaften Weiterbildung der vorstehenden Ausführungsform ist vorgesehen, dass der Schwellenwert der Hubstellung des Schnittbreitenaktors der zumindest annährend maximalen Hubstellung und/oder minimal eingestellten Arbeitsbreite zugeordnet ist. Um Selbstkollisionen der bewegten Komponenten zu vermeiden, ist in dieser Weiterbildung vorgesehen, dass der Einschwenkaktor keinen Hub ausführt bei vorgenannten Bedingungen. Vorzugsweise ist hydraulisch, mechanisch oder elektronisch sichergestellt, beispielsweise durch eine der vorstehend beschriebenen Kopplungsvorrichtungen, dass beim Wendevorgang der Pflugrahmen bei Erreichen des Schwellenwertes nicht eingeschwenkt wird.

Der erfindungsgemäße Anbaudrehpflug ist ferner vorteilhaft dadurch weitergebildet, dass die Rahmenschwenksteuerung dazu eingerichtet ist, den Einschwenkaktor unabhängig von der Schwenkstellung des Pflugrahmens relativ zur Wendekonsole bezüglich der Einschwenkachse zu betätigen. Infolge dieser Weiterbildung ist ein störungsresistenter und einfacher Wendevorgang ermöglicht, wobei die Rahmenschwenksteuerung allein anhand der Hubstellung(en) des Schnittbreitenaktors und/oder Einschwenkaktors agiert.

In einer alternativen, vorteilhaften Ausführungsform des erfindungsgemäßen Anbaudrehpfluges, wobei zumindest der Einschwenkaktor als Druckmittelaktor ausgebildet ist und die Rahmenschwenksteuerung zumindest ein Sperrventil zum Absperren der Druckmittelversorgung des Einschwenkaktors umfasst, ist vorgesehen, dass der Einschwenkaktor als zumindest zweistufiger Stufenzylinder ausgeführt ist, wobei jeder Stufe ein Sperrventil zugeordnet ist, welches in Abhängigkeit der erfassten Hubstellung des Schnittbreitenaktors geschaltet ist. Die Abhängigkeit der Sperrventile zur Hubstellung des Schnittbreitenaktors kann hergestellt werden durch mechanische, hydraulische oder elektrische Taster, welche so angeordnet sind, dass sie bei vorbestimmten Hubstellungen des Schnittbreitenaktors geschaltet sind. Die Stufen des als Stufenzylinders ausgeführten Einschwenkaktors können unabhängig voneinander angesteuert werden, so dass der Einschwenkaktor in verschiedene Hubstellungen für verschiedene Voreinstellungen des Anbaudrehpfluges zur Einnahme der gewünschten Wendestellung gefahren werden kann.

Eine weitere vorteilhafte Weiterbildung des erfindungsgemäßen Anbaudrehpfluges zeichnet sich dadurch aus, dass der Schnittbreitenaktor bei in Wendestellung angeordnetem Pflugrahmen, vorzugsweise durch die Kopplungsvorrichtung, zumindest gegen Ausfahren und/oder Einstellen kleiner Arbeitsbreite blockiert ist. Infolge dieser Maßnahme ist sichergestellt, dass auch anhand des Schnittbreitenaktors keine Selbstkollision herbeigeführt werden kann. Diese Weiterbildung bildet den erfindungsgemäßen Anbaudrehpflug somit hinsichtlich seiner Betriebssicherheit weiter.

Weitere Einzelheiten der Erfindung sind der Beispielsbeschreibung und den Zeichnungen zu entnehmen. Die Zeichnungen zeigen
- Fig.1: eine schematische Ansicht eines erfindungsgemäßen Anbaudrehpfluges in Draufsicht,
- Fig.2: ein Schaltplan einer ersten Ausführungsform des erfindungsgemäßen Anbaudrehpfluges,
- Fig.3a: eine schematische Ansicht einer zweiten Ausführungsform des erfindungsgemäßen Anbaudrehpfluges mit einem Einschwenkaktor, einem Schnittbreitenaktor und einer mechanischen Kopplungsvorrichtung in einer ersten Lage,
- Fig.3b: die zweite Ausführungsform des erfindungsgemäßen Anbaudrehpfluges in einer zweiten Lage,
- Fig.3c: die zweite Ausführungsform des erfindungsgemäßen Anbaudrehpfluges in einer dritten Lage vor dem Einschwenken,
- Fig.3d: die zweite Ausführungsform des erfindungsgemäßen Anbaudrehpfluges in einer dritten Lage nach dem Einschwenken, und
- Fig.4: ein Schaltplan einer dritten Ausführungsform des erfindungsgemäßen Anbaudrehpfluges.

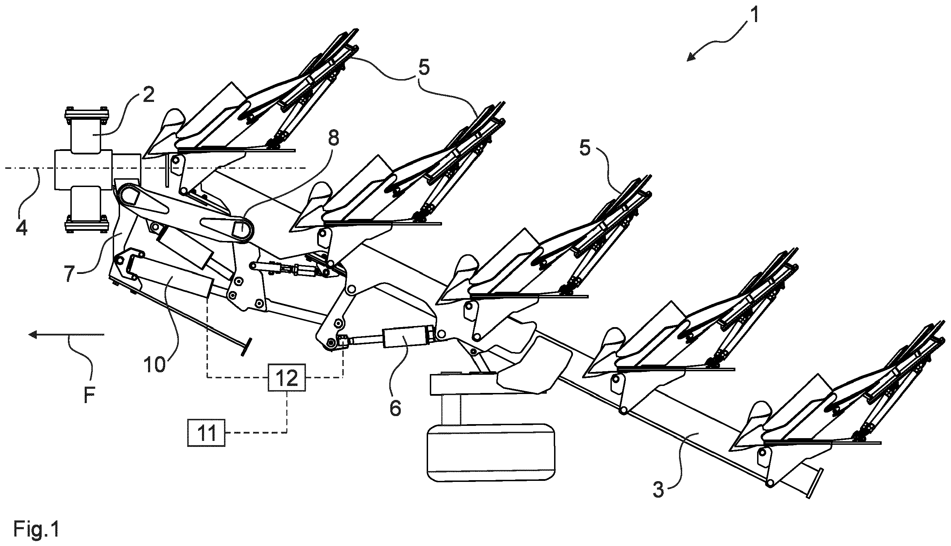

Ein erfindungsgemäßer Anbaudrehpflug 1 in Draufsicht ist in Fig.1 zu sehen. Der Anbaudrehpflug 1 umfasst an seinem vorderen Ende einen Anbaubock 2 zum Anbau an einer nicht gezeigten Zugmaschine, wie beispielsweise einem Ackerschlepper, und einen sich schräg zur Fahrtrichtung F erstreckenden Pflugrahmen 3. Der Pflugrahmen 3 ist um eine zumindest annährend in Fahrtrichtung F ausgerichtete, liegende, also zumindest annährend horizontale, Wendeachse 4 drehbar und trägt daran schwenkbar angeordnete Pflugkörper 5. Die Pflugkörper 5 sind durch einen Schnittbreitenaktor 6 in ihrer Arbeitsbreite in bekannter Weise einstellbar, indem sie am Pflugrahmen 3 verschwenkt werden. In der Draufsicht in Fig.1 sind nur die linkswendenden, in diesem Fall oben angeordneten Pflugkörper 5 zu sehen; eine weitere Reihe rechtswendender Pflugkörper 5 ist natürlich ebenfalls am Pflugrahmen 3 angeordnet und ebenso über den Schnittbreitenaktor 6 verstellbar.

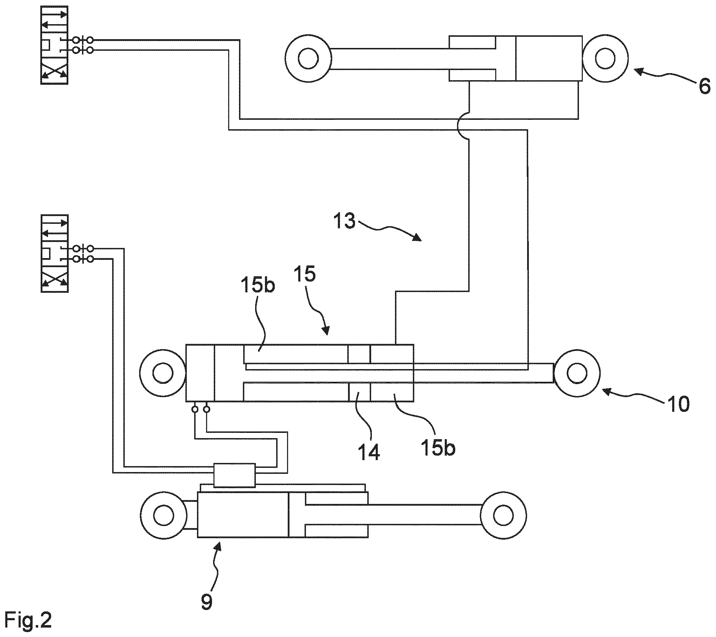

Der Pflugrahmen 3 ist an einer Wendekonsole 7 um eine quer zur Wendeachse 4 angeordnete Einschwenkachse 8, welche in dieser Draufsicht senkrecht zur Bildebene steht, einschwenkbar gelagert. Die Wendekonsole 7 wiederum ist mittels eines in Fig.2 zu sehenden, hier nicht gezeigten Wendeaktors 9 um die liegende Wendeachse 4 drehbar am Anbaubock 2 gelagert. Um den Pflugrahmen 3 für den Wendevorgang in eine Wendestellung mit verringert Querausladung einzuschwenken, ist ein Einschwenkaktor 10 vorgesehen. Der Einschwenkaktor 10 ist zwischen der Wendekonsole 7 und, über ein Zwischenstück, dem Pflugrahmen 3 angeordnet, so dass eine Längung des Einschwenkaktors 10 ein Einschwenken des Pflugrahmens 3 um die Einschwenkachse 8 bewirkt.

Wie Fig.1 zeigt, ist der Schnittbreitenaktor 6 zumindest annährend maximal ausgefahren, so dass die Pflugkörper 5 ihre minimale Arbeitsbreite einnehmen. Der Pflugrahmen 3 weist hierbei eine geringere Querausladung auf, als in Voreinstellung der Pflugkörper 5 in großer Arbeitsbreite, also reduziertem Hub des Schnittbreitenaktors 6. Ferner ist zu sehen, dass der in Fahrtrichtung F vorderste Pflugkörper 5 einen sehr geringen Abstand zum Übergang zwischen Wendekonsole 7 und Anbaubock 2 aufweist. Bei dieser Voreinstellung des Anbaudrehpfluges 1 würde ein Einschwenken des Pflugrahmens 3 mittels des Einschwenkaktors 10 zu einer Kollision des ersten Pflugkörpers 5 mit der Wendekonsole 7 bzw. dem Anbaubock 2 führen. Es ist daher eine Rahmenschwenksteuerung 11 vorgesehen, mittels der der Einschwenkaktor 10 für verschiedene Voreinstellungen in verschiedene Hubstellungen zum Erreichen der Wendestellung steuerbar ist. Hierzu ist der Rahmenschwenksteuerung 11 eine Begrenzungseinrichtung zum Anfahren und Halten der Wendestellung zugeordnet. Mit den in Fig.1 gezeigten Voreinstellungen des Anbaudrehpfluges 1 ist kein Einschwenken des Pflugrahmens 3 mittels des Einschwenkaktors 10 gewünscht, so dass die Rahmenschwenksteuerung 11 den Einschwenkaktor 10 derart steuert, dass er in seiner Stellung gehalten ist, da die Wendestellung bereits erreicht ist. Mittels des Wendeaktors 9 wird somit die Wendung direkt eingeleitet, so dass der Pflugrahmen 3 um 180 Grad um die Wendeachse 4 gedreht wird. Erfindungsgemäß ist vorgesehen, dass die Rahmenschwenksteuerung 11 eine Erfassungseinrichtung 12 zum Erfassen der Hubstellung des Schnittbreitenaktors 6 aufweist, so dass die Rahmenschwenksteuerung 11 dazu eingerichtet ist, den Hubstellweg des Einschwenkaktors 10 in Abhängigkeit der erfassten Hubstellung des Schnittbreitenaktors 6 mittels der Begrenzungseinrichtung auf die Hubstellung für die Wendestellung zu begrenzen.

In Fig.2 ist in Weiterbildung des erfindungsgemäßen Anbaudrehpfluges 1 ein Schaltplan einer ersten Ausführungsform zu sehen in der die Begrenzungseinrichtung hydraulisch ausgebildet ist. Der Einschwenkaktor 10 und der Schnittbreitenaktor 6 sind als Druckmittelaktoren ausgebildet und die Begrenzungseinrichtung und/oder die Erfassungseinrichtung 12 umfasst eine hydraulische Kopplungsvorrichtung 13. Der Einschwenkaktor 10 ist in dieser Ausführungsform als Memoryzylinder ausgeführt und weist einen Memorykolben 14 auf, der die stangenseitige Druckmittelkammer 15 des Einschwenkaktors 10 in zwei separate Druckmittelkammern 15a, 15b unterteilt. Die Kopplungsvorrichtung 13 verbindet die stangenseitige Druckmittelkammer 16 des Schnittbreitenaktors 6 mit der dem Kolben des Einschwenkaktors 10 abgewandten Druckmittelkammer 15b der zwei separaten Druckmittelkammern 15a, 15b des Einschwenkaktors 10 in einer Master-Slave-Verschaltung fluidleitend. Der Memorykolben 14 ist über die Druckmittelanschlüsse der Druckmittelkammern 15a, 15b unabhängig von den Hubbewegungen des eigentlichen Kolbens des Einschwenkaktors 10 verfahrbar. Der Memorykolben 14 kann also in seiner Lage relativ zum Kolben des Einschwenkaktors 10 in einstellbarer Weise verschoben werden, so dass er als interner Anschlag für die Hubstellung des Einschwenkaktors 10 dienen kann.

In der in Fig.2 gezeigten Verschaltung bewirkt eine Verstellung der Arbeitsbreite mittels des Schnittbreitenaktors 6 hin zu einem größeren Hub desselbigen, dass Öl aus der stangenseitigen Druckmittelkammer des Schnittbreitenaktors 6 verdrängt und über die Master-Slave-Verschaltung der dem Kolben abgewandten Druckmittelkammer 15b zugeleitet wird, so dass sich der Memorykolben 14 in Richtung des Kolbens des Einschwenkaktors 10 verschiebt. Der Memorykolben 14 begrenzt somit den ausführbaren Gesamthub des Einschwenkaktors 10, da der Kolben auf den dann gegenüber der gezeigten Stellung nach links verschobenen Memorykolben 14 stößt. Ferner ist der Schnittbreitenaktor 6 somit bei in Wendestellung angeordnetem Pflugrahmen 3 durch die hydraulische Kopplungsvorrichtung 13 zumindest gegen Ausfahren und/oder Einstellen kleiner Arbeitsbreite blockiert. Der Memorykolben 14 wirkt gemeinsam mit der Master-Slave-Verschaltung somit sowohl als Erfassungseinrichtung 12 als auch als Begrenzungseinrichtung. Um den Schnittbreitenaktor 6 in entgegengesetzter Richtung zu verfahren, also hin zu einem kleinerem Hub, kann die dem Kolben des Einschwenkaktors 10 zugewandte Druckmittelkammer 15a über einen entsprechenden Druckmittelanschluss mit Öl versorgt werden. Der Memorykolben 14 fährt dann in Richtung des Zylinderkammerbodens des Einschwenkaktors 10, so dass Öl aus der Druckmittelkammer 15b in die stangenseitige Druckmittelkammer des Schnittbreitenaktors 6 verdrängt wird. Ansonsten sind die entsprechenden Druckmittelanschlüsse über geeignete Ventile gesperrt, so dass der Memorykolben 14 in seiner Position relativ zum Kolben des Einschwenkaktors 10 gehalten ist und einen zuverlässigen internen Anschlag bildet. Das System ist initial über die Ölmengen in der stangenseitigen Druckmittelkammer des Schnittbreitenaktors 6 im Verhältnis zum Hub des Einschwenkaktors, der Ölmenge in der Druckmittelkammer 15b und der Lage des Memorykolben 14 zum Kolben so einzustellen, dass der Memorykolben 14 die Hubstellung des Einschwenkaktors 14 in Abhängigkeit zu der Hubstellung des Schnittbreitenaktors 6 so begrenzt, dass diese Hubstellung der gewünschten Wendestellung entspricht. Die von dem Schnittbreitenaktor 6 bei Hubbewegungen über die Master-Slave-Verschaltung verdrängte Ölmenge ist natürlich ebenfalls zu berücksichtigen, um den Memorykolben 14 zuverlässig entsprechend der gewünschten Wendestellung zu positionieren.

Der Einschwenkaktor 10 und der Wendeaktor 9 sind ferner über eine hydraulische Folgeschaltung miteinander gekoppelt, so dass der Einschwenkaktor 10 zuerst einschwenkt, falls erforderlich, und erst nach Begrenzen des Einschwenkaktors 10 der Wendeaktor 9 den Pflugrahmen 3 wendet und der Einschwenkaktor 10 anschließend wieder ausschwenkt. Hierzu führt der Wendeaktor 9 einen Hubzyklus durch in dem er den Pflugrahmen 3 zuerst über den Wendepunkt bei einer Drehung von etwa 90 Grad dreht und dann in umgekehrter Hubrichtung weiter in die um 180 gedrehte Stellung wendet.

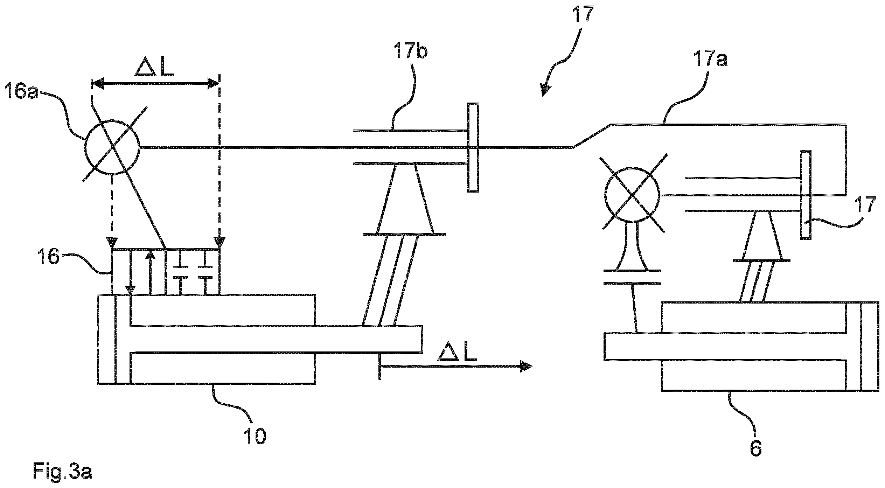

In Fig.3a-d ist in einer alternativen Weiterbildung des erfindungsgemäßen Anbaudrehpfluges 1 eine zweite Ausführungsform zu sehen, in der der Einschwenkaktor 10 und der Schnittbreitenaktor 6 ebenfalls als Druckmittelaktoren ausgebildet sind, die Rahmenschwenksteuerung 11 ein Sperrventil 16 umfasst und die Erfassungseinrichtung 12 eine mechanische Kopplungsvorrichtung 17 umfasst. Der Einschwenkaktor 10, der Schnittbreitenaktor 6 und die mechanische Kopplungsvorrichtung 17 zwischen dem Schnittbreitenaktor 6 und dem Einschwenkaktor 10, die an einem Ventillstellhebel 16a des Sperrventils 16 angebunden ist, befinden sich in Fig.3a in einer ersten Lage. Der Schnittbreitenaktor 6 ist in dieser ersten Lage minimal gelängt, nimmt also seine kleinste Hubstellung ein, was bei dem Anbaudrehpflug 1 in Fig.1 der maximal einstellbaren Arbeitsbreite der Pflugkörper 5 entspricht. Die mechanische Kopllungsvorrichtung 17 setzt Hubbewegungen des Schnittbreitenaktors 6 und des Einschwenkaktors 10 über den Ventilstellhebel 16a in Ventilstellbewegungen um, so dass das Sperrventil 16 bei Erreichen der gewünschten Wendestellung absperrt. Die Rahmenschwenksteuerung 11 ist somit dazu eingerichtet, den Einschwenkaktor 10 unabhängig von der Schwenkstellung des Pflugrahmens 3 relativ zur Wendekonsole 7 bezüglich der Einschwenkachse 8 zu betätigen.

Die mechanische Kopplungsvorrichtung 17 umfasst einen als Bowdenzug 17 ausgeführten Übertragungszug dessen Seele 17a einerseits am Ventilstellhebel 16a und andererseits an der Kolbenstange des Schnittbreitenaktors 6 angelenkt ist. Hubbewegungen des Schnittbreitenaktors 6 werden somit über die Seele 17a direkt in Ventillstellbewegungen umgesetzt. Die Anschlaghülsen 17b des Bowdenzugs 17 sind einerseits an der Kolbenstange des Einschwenkaktors 10 und andererseits an der Zylinderkammer des Schnittbreitenaktors 6 angelenkt. Die Anschlaghülse 17b auf der Kolbenstange des Einschwenkaktors 10 lässt sich somit relativ zu dem Sperrventil 16 verschieben, welches an der Zylinderkammer des Einschwenkaktors 10 ortsfest bezüglich Hubbewegungen des Schnittbreitenaktors 6 und des Einschwenkaktors 10 angeordnet ist. Die Anschlaghülsen 17b führen bei Verschiebung ihrerseits die Seele 17a mit, so dass ein Ausfahren des Einschwenkaktors 10 bewirkt, dass der Ventilstellhebel 16a herumgeschwenkt bzw. das Sperrventil 16 in Richtung seiner geschlossenen Stellung bewegt wird. In der in Fig.3a gezeigten Lage ist dadurch ermöglicht, dass der Ventilstellweg ΔL durch Einschwenken des Pflugrahmens 3 mittels des Einschwenkaktors 10 überwunden wird. Der Ventilstellweg ΔL ist so auf den Hub des Einschwenkaktors 10 abgestimmt, dass der Pflugrahmen 3 nach Überwindung des Ventilstellwegs ΔL die gewünschte Wendestellung erreicht.

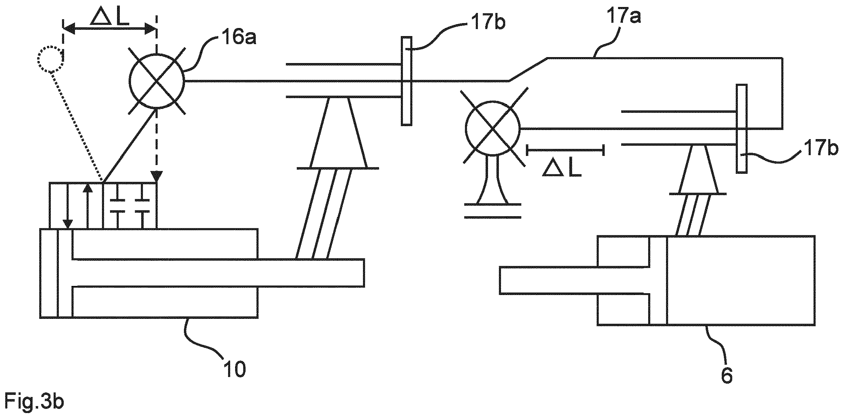

In Fig.3b ist die zweite Ausführungsform in einer zweiten Lage gezeigt. Der Schnittbreitenaktor 6 befindet sich in seiner maximal gelängten Stellung, also nehmen die Pflugkörper 5 die minimale Arbeitsbreite ein und der Anbaudrehpflug 1 befindet sich in der in Fig.1 gezeigten Position. Die Seele 17a ist bei Ziehen oder Drücken an der Seele 17a selbst relativ zu den Anschlaghülsen 17b verschiebbar, so dass der Hub des Schnittbreitenaktors 6 sich direkt in die Ventilstellbewegung des Sperrventils 16 umgesetzt hat. Der Ventilstellweg ΔL wurde in dieser Lage bereits vor dem Einschwenken durch den Schnittbreitenaktor 6 über die Seele 17a überwunden, so dass das Sperrventil 16 sich in der geschlossenen Stellung befindet. Der Wendevorgang wird folglich ohne vorheriges Einschwenken ausgeführt, so dass der Wendeaktor 9 den Pflugrahmen 3 direkt drehen kann.

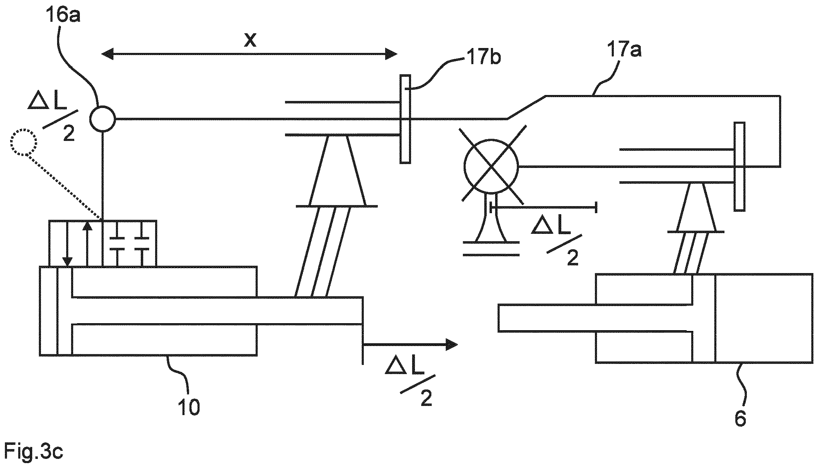

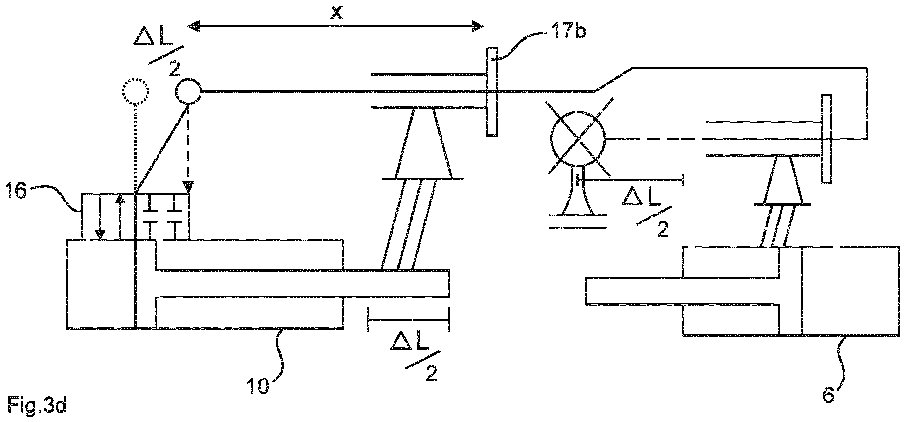

In den Fig.3c, 3d ist die zweite Ausführungsform in einer dritten Lage vor und nach dem Einschwenken gezeigt, um die Funktionsweise der mechanischen Kopplungsvorrichtung 17 bzw. des Bowdenzugs 17 weiter zu verdeutlichen. In der in Fig.3c gezeigten Lage hat der Schnittbreitenaktor 6 einen Hub zurückgelegt der dem halben Ventilstellweg ΔL entspricht. Dieser Hub des Schnittbreitenaktors 6 entspricht einer mittleren Arbeitsbreite der Pflugkörper 5 und wurde über die Seele 17a direkt in eine Ventilstellbewegung umgesetzt. Zum Einschwenken steht dem Einschwenkaktor 10 folglich ebenfalls noch der halbe Ventilstellweg ΔL zur Verfügung. Die Anschlaghülse 17b, welche an der Kolbenstange des Einschwenkaktors 10 befestigt ist, weist nach Verschiebung der Seele 17a infolge der Hubbewegung des Schnittbreitenaktors 6 vor dem Einschwenken, wie in Fig.3c gezeigt, noch den Abstand x zum Ventilstellhebel 16a auf.

In Fig.3d ist die zweite Ausführungsform in der dritten Lage nach dem Einschwenken gezeigt. Der Einschwenkaktor 10 hat einen Hub ausgeführt, welcher dem halben Ventilstellweg ΔL entspricht. Da beim Einschwenkvorgang lediglich die Anschlaghülse 17b an der Kolbenstange des Einschwenkaktors 10 verschoben wird und sich der Abstand x zwischen dieser Anschlaghülse 17b und dem Ventilstellhebel 16a nicht ändert, weil die Anschlaghülse 17b die Seele 17a mitnimmt, wird der Einschwenkvorgang durch Erreichen der geschlossenen Stellung des Sperrventils 16 begrenzt. Durch geeignete Wahl des Ventilstellwegs ΔL gelingt es, dass der Pflugrahmen 3 sich nun in der gewünschten Wendestellung befindet und dort gehalten wird.

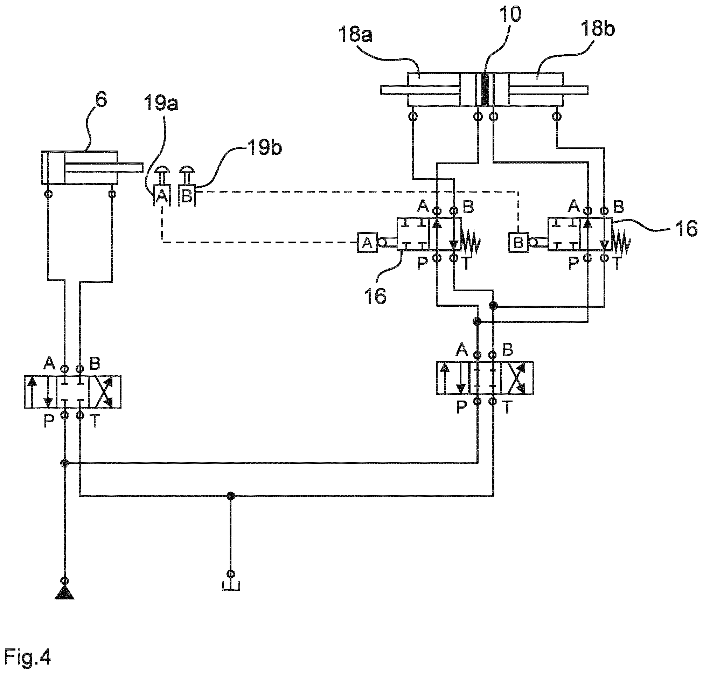

In Fig.4 ist in Weiterbildung des erfindungsgemäßen Anbaudrehpfluges der Schaltplan einer dritten alternativen Ausführungsform gezeigt bei der der Einschwenkaktor 10 als zweistufiger Stufenzylinder ausgeführt ist. Jeder der Stufen 18a, 18b ist ein Sperrventil 16 zugeordnet, welche in Abhängigkeit der erfassten Hubstellung des Schnittbreitenaktors 6 geschaltet sind. Um die Abhängigkeit der Sperrventile 16 zu der Hubstellung des Schnittbreitenaktors 6 herzustellen, sind zwei Taster 19a, 19b vorgesehen. Der Taster 19a ist dem Sperrventil 16 der linken Stufe 18a des Einschwenkaktors 10 zugeordnet und schaltet bei einer mittleren Hubstellung des Schnittbreitenaktors 6. Der Taster 19b ist dem Sperrventil 16 der rechten Stufe 18b des Einschwenkaktors 10 zugeordnet und schaltet bei maximaler Hubstellung des Schnittebreitenaktors 6. Die Taster 19a, 19b können durch Überfahren des Tasters 19a, 19b geschaltet werden und sorgen dann dafür, dass das jeweilige Sperrventil 16 in eine Sperrstellung schaltet, so dass die jeweilige Stufe 18a, 18b nicht mit Druckmittel versorgt wird.

Befindet sich der Schnittbreitenaktor 6 also in der in Fig.4 gezeigten minimal gelängten Stellung, ist keiner der Taster 19a, 19b betätigt, so dass beide Stufen 18a, 18b des Einschwenkaktors 10 beim Einschwenken mit Druckmittel versorgt werden und der Einschwenkaktor 10 sich maximal längt. Die Wendestellung wird in dieser Lage der Druckmittelaktoren bzw. in dieser Voreinstellung des Anbaudrehpfluges bei der maximalen Hubstellung des Einschwenkaktors 10 erreicht, also beide Stufen 18a, 18b sind ausgefahren.

Wird der Schnittbreitenaktor 6 in eine mittlere Hubstellung verfahren, um eine mittlere Arbeitsbreite der Pflugkörper 5 einzustellen, wird der Taster 19a betätigt und das Sperrventil der linken Stufe 18a wird betätigt. Wird der Einschwenkaktor 10 für den Wendevorgang mit Druckmittel versorgt, fährt lediglich die rechte Stufe 18b des Einschwenkaktors aus, so dass die Wendestellung bei der Hälfte der maximalen Hubstellung des Einschwenkaktors 10 erreicht ist. Die rechte Stufe 18b ist ausgefahren während die linke Stufe 18a in der gezeigten Position verbleibt, da das zugeordnete Sperrventil 16 die Druckmittelversorgung unterbunden hat.

Wenn der Schnittbreitenaktor 6 maximal gelängt ist, so dass die Pflugkörper 5 mit minimaler Arbeitsbreite eingestellt sind, wie der in Fig.1 gezeigte Anbaudrehpflug 1, sind beide Taster 19a, 19b betätigt, so dass beide Sperrventile 16 in die Sperrstellung geschaltet sind. Wird in diesem Fall der Wendevorgang eingeleitet, verbleibt der Einschwenkaktor 10 in seiner minimal gelängten Position, wie in Fig.4 gezeigt, und der Wendeaktor 9 leitet direkt die Wendung ein. Die Wendestellung ist somit schon vorerreicht.

In Fortführung der Erkenntnis der Erfindung, dass je nach eingestellter Arbeitsbreite am Schnittbreitenaktor 6 nur teilweises oder kein Einschwenken erforderlich ist, ist vorgesehen, dass bei erfassten Hubstellungen des Schnittbreitenaktors 6, die kleiner als ein vorbestimmter Schwellenwert sind, die Begrenzungseinrichtung den Hubstellweg des Einschwenkaktors 10 nicht begrenzt, während bei erfassten Hubstellungen des Schnittbreitenaktors 6, die mit der gewünschten Wendestellung verknüpft oder größer bzw. gleich dem vorbestimmten Schwellenwert sind, die Begrenzungseinrichtung den Hubstellweg des Einschwenkaktors 10 begrenzt und damit der Einschwenkaktor 10 in der Wendestellung gehalten ist. Insbesondere ist vorgesehen, dass der Schwellenwert der Hubstellung des Schnittbreitenaktors 6 der zumindest annährend maximalen Hubstellung und/oder minimal eingestellten Arbeitsbreite zugeordnet ist. Der dem Einschwenkaktor 10 zur Einnahme der Wendestellung freigegebene Hubweg steht somit in Relation zu dem genutzten Hub des Schnittbreitenaktors 6.

### Bezugszeichenliste

- 1: Anbaudrehpflug
- 2: Anbaubock
- F: Fahrtrichtung
- 3: Pflugrahmen
- 4: Wendeachse
- 5: Pflugkörper
- 6: Schnittbreitenaktor
- 7: Wendekonsole
- 8: Einschwenkachse
- 9: Wendeaktor
- 10: Einschwenkaktor
- 11: Rahmenschwenksteuerung
- 12: Erfassungseinrichtung
- 13: hydraulische Kopplungseinrichtung
- 14: Memorykolben
- 15: Druckmittelkammer
- 15a, 15b: separate Druckmittelkammer
- 16: Sperrventil
- 16a: Ventilstellhebel
- 17: mechanische Kopplungsvorrichtung
- 17a: Seele
- 17b: Anschlaghülse
- 18a, 18b: Stufe
- 19a, 19b: Taster

## Patentansprüche

1. Anbaudrehpflug (1) mit einem Anbaubock (2) zum Anbau an einer Zugmaschine, einem Pflugrahmen (3), der um eine liegende Wendeachse (4) drehbar ist, mit daran schwenkbar angeordneten Pflugkörpern (5), wobei die Pflugkörper (5) durch einen Schnittbreitenaktor (6) in ihrer Arbeitsbreite in einstellbarer Weise verschwenkbar sind und der Pflugrahmen (3) an einer Wendekonsole (7), die um die liegende Wendeachse (4) drehbar am Anbaubock (2) gelagert ist, um eine quer zur Wendeachse (4) angeordnete Einschwenkachse (8) einschwenkbar gelagert und durch einen Einschwenkaktor (10) für den Wendevorgang in eine Wendestellung mit verringerter Querausladung einschwenkbar ist, wobei der Einschwenkaktor (10) mittels einer Rahmenschwenksteuerung (11) für verschiedene Voreinstellungen in verschiedene Hubstellungen zum Erreichen der Wendestellung steuerbar ist, wobei die Rahmenschwenksteuerung (11) eine Begrenzungseinrichtung zum Anfahren und Halten der Wendestellung umfasst, **dadurch gekennzeichnet, dass** die Rahmenschwenksteuerung (11) eine Erfassungseinrichtung (12) zum Erfassen der Hubstellung des Schnittbreitenaktors (6) aufweist, dass die Rahmenschwenksteuerung (11) dazu eingerichtet ist, den Hubstellweg des Einschwenkaktors (10) in Abhängigkeit der erfassten Hubstellung des Schnittbreitenaktors (6) mittels der Begrenzungseinrichtung auf die Hubstellung für die Wendestellung zu begrenzen.

2. Anbaudrehpflug (1) nach Anspruch 1, wobei der Einschwenkaktor (10) und der Schnittbreitenaktor (6) als Druckmittelaktoren ausgebildet sind, **dadurch gekennzeichnet, dass** die Begrenzungseinrichtung und/oder die Erfassungseinrichtung (12) eine hydraulische Kopplungsvorrichtung (13) umfasst, dass die Kopplungsvorrichtung (13) zumindest eine Druckmittelkammer des Schnittbreitenaktors (6) mit zumindest einer Druckmittelkammer (15, 15a, 15b) des Einschwenkaktors (10) fluidleitend verbindet.

3. Anbaudrehpflug (1) nach Anspruch 2, **dadurch gekennzeichnet, dass** der Einschwenkaktor (10) als Memoryzylinder ausgeführt ist und einen Memorykolben (14) aufweist, der eine Druckmittelkammer (15) des Einschwenkaktors (10) in zwei separate Druckmittelkammern (15a, 15b) unterteilt, dass die Kopplungsvorrichtung (13) die Druckmittelkammer des Schnittbreitenaktors (6) mit der dem Kolben des Einschwenkaktors (10) abgewandten Druckmittelkammer (15b) der zwei separaten Druckmittelkammern (15a, 15b) in einer Master-Slave-Verschaltung verbindet.

4. Anbaudrehpflug (1) nach zumindest einem der vorstehenden Ansprüche, wobei zumindest der Einschwenkaktor (10) als Druckmittelaktor ausgebildet ist und die Rahmenschwenksteuerung (11) ein Sperrventil (16) zum Absperren der Druckmittelversorgung des Einschwenkaktors (10) umfasst **dadurch gekennzeichnet, dass** die Erfassungseinrichtung (12) eine mechanische Kopplungsvorrichtung (17) zwischen Schnittbreitenaktor (6) und Einschwenkaktor (10) umfasst, die an das Sperrventil (16) angebunden ist und Hubbewegungen des Schnittbreitenaktors (6) und des Einschwenkaktors (10) in Ventilstellbewegungen umsetzt, insbesondere das Sperrventil (16) bei Erreichen der gewünschten Wendestellung absperrt.

5. Anbaudrehpflug (1) nach Anspruch 4, **dadurch gekennzeichnet, dass** das Sperrventil (16) bezüglich Hubbewegungen des Schnittbreitenaktors (6) und des Einschwenkaktors (10) ortsfest, vorzugsweise am Einschwenkaktor (10), angeordnet ist und die mechanische Kopplungsvorrichtung (17) das Sperrventil (16) mit der Zylinderkammer und/oder Kolbenstange des Schnittbreitenaktors (6) und des Einschwenkaktors (10) verbindet.

6. Anbaudrehpflug (1) nach Anspruch 4 oder 5, **dadurch gekennzeichnet, dass** die mechanische Kopplungsvorrichtung (17) einen Übertragun gszug (17), insbesondere Bowdenzug (17), umfasst, dessen Seele (17a) einerseits an einem Ventilstellhebel (16a) und andererseits an der Kolbenstange des Schnittbreitenaktors (6) angelenkt ist und dessen Anschlaghülsen (17b) einerseits an der Kolbenstange des Einschwenkaktors (10) und andererseits an der Zylinderkammer des Schnittbreitenaktors (6) angelenkt sind.

7. Anbaudrehpflug (1) nach zumindest einem der vorstehenden Ansprüche, **dadurch gekennzeichnet, dass** bei erfassten Hubstellungen des Schnittbreitenaktors (6), die kleiner als ein vorbestimmter Schwellenwert sind, die Begrenzungseinrichtung den Hubstellweg des Einschwenkaktors (10) nicht begrenzt, während bei erfassten Hubstellungen des Schnittbreitenaktors (6), die mit der gewünschten Wendestellung verknüpft oder größer bzw. gleich dem vorbestimmten Schwellenwert sind, die Begrenzungseinrichtung den Hubstellweg des Einschwenkaktors (10) begrenzt und damit der Einschwenkaktor (10) in der Wendestellung gehalten ist.

8. Anbaudrehpflug (1) nach Anspruch 7, **dadurch gekennzeichnet, dass** der Schwellenwert der Hubstellung des Schnittbreitenaktors (6) der zumindest annährend maximalen Hubstellung und/oder minimal eingestellten Arbeitsbreite zugeordnet ist.

9. Anbaudrehpflug (1) nach zumindest einem der vorstehenden Ansprüche, **dadurch gekennzeichnet, dass** die Rahmenschwenksteuerung (11) dazu eingerichtet ist, den Einschwenkaktor (10) unabhängig von der Schwenkstellung des Pflugrahmens (3) relativ zur Wendekonsole (7) bezüglich der Einschwenkachse (8) zu betätigen.

10. Anbaudrehpflug (1) nach zumindest einem der vorstehenden Ansprüche, **dadurch gekennzeichnet, dass** der Einschwenkaktor (10) derart mit einem Wendeaktor (9) verschaltet ist, dass bei Einleiten des Wendevorgangs zuerst der Einschwenkaktor (10) betätigt wird und erst nach Begrenzen des Einschwenkaktors (10) durch die Begrenzungseinrichtung der Wendeaktor (9) betätigt wird.

11. Anbaudrehpflug (1) nach zumindest einem der vorstehenden Ansprüche, wobei zumindest der Einschwenkaktor (10) als Druckmittelaktor ausgebildet ist und die Rahmenschwenksteuerung (11) zumindest ein Sperrventil (16) zum Absperren der Druckmittelversorgung des Einschwenkaktors (10) umfasst **dadurch gekennzeichnet, dass** der Einschwenkaktor (10) als zumindest zweistufiger Stufenzylinder ausgeführt ist, wobei jeder Stufe (18a, 18b) ein Sperrventil (16) zugeordnet ist, welches in Abhängigkeit der erfassten Hubstellung des Schnittbreitenaktors (6) geschaltet ist.

12. Anbaudrehpflug (1) nach zumindest einem der vorstehenden Ansprüche, insbesondere Anspruch 2 oder 4, **dadurch gekennzeichnet, dass** der Schnittbreitenaktor (6) bei in Wendestellung angeordnetem Pflugrahmen (3), vorzugsweise durch die Kopplungsvorrichtung (13, 17), zumindest gegen Ausfahren und/oder Einstellen kleiner Arbeitsbreite blockiert ist.

## Claims

1. Mounted turn-about plow (1) having a mounting pedestal (2) for being mounted on a tractor, a plow frame (3) which is rotatable about a horizontal turning axis (4), having plow bodies (5) pivotally arranged thereon, the plow bodies (5) being pivotally adjustable in terms of their working width by means of a cutting width actuator (6), and the plow frame (3) being mounted on a turning bracket (7), which is rotatably mounted on the mounting pedestal (2) about the horizontal turning axis (4), so that said frame can be pivoted about a pivot axis (8) arranged transversely to the turning axis (4) and the frame being pivotable into a turning position with reduced transverse extension by means of a pivot actuator (10) for the turning process, the pivot actuator (10) being controllable by means of a frame pivot controller (11) for different pre-settings in different lift positions to reach the turning position, the frame pivot controller (11) comprising a limiting device for starting and holding the turning position, **characterized in that** the frame pivot controller (11) has a detection device (12) for detecting the lift position of the cutting width actuator (6), and **in that** the frame pivot controller (11) is designed to limit the lift adjustment path of the pivot actuator (10) to the lift position for the turning position by means of the limiting device depending on the detected lift position of the cutting width actuator (6).

2. Mounted turn-about plow (1) according to claim 1, the pivot actuator (10) and the cutting width actuator (6) being designed as pressure medium actuators, **characterized in that** the limiting device and/or the detection device (12) comprises a hydraulic coupling apparatus (13), and **in that** the coupling apparatus (13) fluidically connects at least one pressure medium chamber of the cutting width actuator (6) to at least one pressure medium chamber (15, 15a, 15b) of the pivot actuator (10).

3. Mounted turn-about plow (1) according to claim 2, **characterized in that** the pivot actuator (10) is designed as a memory cylinder and has a memory piston (14) which divides a pressure medium chamber (15) of the pivot actuator (10) into two separate pressure medium chambers (15a, 15b), and **in that** the coupling apparatus (13) connects the pressure medium chamber of the cutting width actuator (6) to the pressure medium chamber (15b) of the two separate pressure medium chambers (15a, 15b) facing away from the piston of the pivot actuator (10) in a master-slave connection.

4. Mounted turn-about plow (1) according to at least one of the preceding claims, at least the pivot actuator (10) being designed as a pressure medium actuator and the frame pivot controller (11) comprising a shut-off valve (16) for blocking the pressure medium supply of the pivot actuator (10),
**characterized in that** the detection device (12) comprises a mechanical coupling apparatus (17) between the cutting width actuator (6) and the pivot actuator (10), which apparatus is joined to the shut-off valve (16) and converts lift movements of the cutting width actuator (6) and the pivot actuator (10) into valve adjustment movements, in particular blocks the shut-off valve (16) when the desired turning position is reached.

5. Mounted turn-about plow (1) according to claim 4, **characterized in that** the shut-off valve (16) is arranged to be stationary with respect to lift movements of the cutting width actuator (6) and the pivot actuator (10), preferably on the pivot actuator (10), and the mechanical coupling apparatus (17) connects the shut-off valve (16) to the cylinder chamber and/or piston rod of the cutting width actuator (6) and the pivot actuator (10).

6. Mounted turn-about plow (1) according to claim 4 or claim 5, **characterized in that** the mechanical coupling apparatus (17) comprises a transmission cable (17), in particular a Bowden cable (17), the core (17a) of which is linked on one side to a valve adjustment lever (16a) and on the other side to the piston rod of the cutting width actuator (6), and the stop sleeves (17b) of which are linked on one side to the piston rod of the pivot actuator (10) and on the other side to the cylinder chamber of the cutting width actuator (6).

7. Mounted turn-about plow (1) according to at least one of the preceding claims, **characterized in that,** if lift positions of the cutting width actuator (6), which are less than a predetermined threshold value, are detected, the limiting device does not limit the lift adjustment path of the pivot actuator (10), while, if lift positions of the cutting width actuator (6), which are linked to the desired turning position or are greater than or equal to the predetermined threshold value, are detected, the limiting device limits the lift adjustment path of the pivot actuator (10) and therefore the pivot actuator (10) is held in the turning position.

8. Mounted turn-about plow (1) according to claim 7, **characterized in that** the threshold value of the lift position of the cutting width actuator (6) is associated with the at least approximately maximum lift position and/or the minimum set working width.

9. Mounted turn-about plow (1) according to at least one of the preceding claims, **characterized in that** the frame pivot controller (11) is designed to actuate the pivot actuator (10) relative to the turning bracket (7) with respect to the pivot axis (8) independently of the pivot position of the plow frame (3).

10. Mounted turn-about plow (1) according to at least one of the preceding claims, **characterized in that** the pivot actuator (10) is connected to a turning actuator (9) in such a way that, when the turning process is initiated, the pivot actuator (10) is actuated first and the turning actuator (9) is only actuated after the pivot actuator (10) has been limited by the limiting device.

11. Mounted turn-about plow (1) according to at least one of the preceding claims, at least the pivot actuator (10) being designed as a pressure medium actuator and the frame pivot controller (11) comprising at least one shut-off valve (16) for blocking the pressure medium supply of the pivot actuator (10), **characterized in that** the pivot actuator (10) is designed as an at least two-step stepped cylinder, each step (18a, 18b) being associated with a shut-off valve (16) which is switched depending on the detected lift position of the cutting width actuator (6).

12. Mounted turn-about plow (1) according to at least one of the preceding claims, in particular claim 2 or claim 4, **characterized in that** the cutting width actuator (6) is blocked at least against extending and/or adjusting the small working width when the plow frame (3) is arranged in the turning position, preferably by means of the coupling apparatus (13, 17).

## Revendications

1. Charrue réversible portée (1) comportant une tête d'attelage (2) pour l'attelage à un véhicule tracteur, un châssis de charrue (3) qui peut tourner autour d'un axe de retournement (4) horizontal, comportant des corps de charrue (5) disposés de manière à pouvoir pivoter sur celui-ci, les corps de charrue (5) pouvant être pivotés de manière réglable dans leur largeur de travail par un actionneur de largeur de coupe (6) et le châssis de charrue (3) étant monté de manière à pouvoir pivoter autour d'un axe de pivotement (8) disposé transversalement par rapport à l'axe de retournement (4) sur une console de retournement (7), laquelle est montée de manière à pouvoir tourner autour de l'axe de retournement (4) horizontal sur la tête d'attelage (2), et pouvant être pivoté par un actionneur de pivotement (10) dans une position de retournement comportant une portée transversale réduite pour le processus de retournement, l'actionneur de pivotement (10) pouvant être commandé au moyen d'une commande de pivotement de châssis (11) pour différents préréglages dans différentes positions de course pour atteindre la position de retournement, la commande de pivotement de châssis (11) comprenant un appareil de limitation pour le démarrage et le maintien de la position de retournement,
**caractérisée en ce que** la commande de pivotement de châssis (11) présente un appareil de détection (12) pour la détection de la position de course de l'actionneur de largeur de coupe (6), **en ce que** la commande de pivotement de châssis (11) est configurée pour limiter le parcours de réglage de course de l'actionneur de pivotement (10) à la position de course pour la position de retournement en fonction de la position de course détectée de l'actionneur de largeur de coupe (6) au moyen de l'appareil de limitation.

2. Charrue réversible portée (1) selon la revendication 1, l'actionneur de pivotement (10) et l'actionneur de largeur de coupe (6) étant conçus comme des actionneurs à fluide sous pression, **caractérisée en ce que** l'appareil de limitation et/ou l'appareil de détection (12) comprennent un dispositif d'accouplement (13) hydraulique, **en ce que** le dispositif d'accouplement (13) relie d'une manière conductrice de fluide au moins une chambre de fluide sous pression de l'actionneur de largeur de coupe (6) à au moins une chambre de fluide sous pression (15, 15a, 15b) de l'actionneur de pivotement (10).

3. Charrue réversible portée (1) selon la revendication 2,
**caractérisée en ce que** l'actionneur de pivotement (10) est conçu comme un vérin mémoire et présente un piston mémoire (14), lequel divise une chambre de fluide sous pression (15) de l'actionneur de pivotement (10) en deux chambres de fluide sous pression (15a, 15b) séparées, **en ce que** le dispositif d'accouplement (13) relie en une raccordement maître-esclave la chambre de fluide sous pression de l'actionneur de largeur de coupe (6) à la chambre de fluide sous pression (15b) opposée au piston de l'actionneur de pivotement (10) des deux chambres de fluide sous pression (15a, 15b) séparées.

4. Charrue réversible portée (1) selon au moins l'une des revendications précédentes, au moins l'actionneur de pivotement (10) étant conçu comme un actionneur à fluide sous pression et la commande de pivotement de châssis (11) comprenant une vanne de fermeture (16) pour la fermeture de l'approvisionnement en fluide sous pression de l'actionneur de pivotement (10), **caractérisée en ce que** l'appareil de détection (12) comprend un dispositif d'accouplement mécanique (17) entre l'actionneur de largeur de coupe (6) et l'actionneur de pivotement (10), lequel dispositif d'accouplement est relié à la vanne de fermeture (16) et transforme des mouvements de course de l'actionneur de largeur de coupe (6) et de l'actionneur de pivotement (10) en mouvements de réglage de vanne, en particulier ferme la vanne de fermeture (16) lorsque la position de retournement souhaitée est atteinte.

5. Charrue réversible portée (1) selon la revendication 4,
**caractérisée en ce que** la vanne de fermeture (16) est disposée de manière spatialement fixe, de préférence sur l'actionneur de pivotement (10), par rapport à des mouvements de course de l'actionneur de largeur de coupe (6) et de l'actionneur de pivotement (10) et le dispositif d'accouplement mécanique (17) relie la vanne de fermeture (16) à la chambre de vérin et/ou à la tige de piston de l'actionneur de largeur de coupe (6) et de l'actionneur de pivotement (10).

6. Charrue réversible portée (1) selon la revendication 4 ou 5,
**caractérisée en ce que** le dispositif d'accouplement mécanique (17) comprend un câble de transmission (17), en particulier un câble Bowden (17), dont l'âme (17a) est articulée d'un côté sur un levier de réglage de vanne (16a) et de l'autre côté sur la tige de piston de l'actionneur de largeur de coupe (6) et dont les douilles de butée (17b) sont articulées d'un côté sur la tige de piston de l'actionneur de pivotement (10) et de l'autre côté sur la chambre de vérin de l'actionneur de largeur de coupe (6).

7. Charrue réversible portée (1) selon au moins l'une des revendications précédentes, **caractérisée en ce que,** lors de la détection de positions de course de l'actionneur de largeur de coupe (6) qui sont inférieures à une valeur seuil prédéterminée, l'appareil de limitation ne limite pas le parcours de réglage de course de l'actionneur de pivotement (10), tandis que, lors de la détection de positions de course de l'actionneur de largeur de coupe (6) qui sont liées à la position de retournement souhaitée ou sont supérieures ou égales à la valeur seuil prédéterminée, l'appareil de limitation limite le parcours de réglage de course de l'actionneur de pivotement (10) et l'actionneur de pivotement (10) est ainsi maintenu dans la position de retournement.

8. Charrue réversible portée (1) selon la revendication 7,
**caractérisée en ce que** la valeur seuil de la position de course de l'actionneur de largeur de coupe (6) est associée à la position de course au moins approximativement maximale et/ou à la largeur de travail réglée au minimum.

9. Charrue réversible portée (1) selon au moins l'une des revendications précédentes, **caractérisée en ce que** la commande de pivotement de châssis (11) est configurée pour actionner l'actionneur de pivotement (10) indépendamment de la position de pivotement du châssis de charrue (3) par rapport à la console de retournement (7) par rapport à l'axe de pivotement (8).

10. Charrue réversible portée (1) selon au moins l'une des revendications précédentes, **caractérisée en ce que** l'actionneur de pivotement (10) est raccordé à un actionneur de retournement (9) de manière telle que, lors du lancement du processus de retournement, l'actionneur de pivotement (10) est actionné en premier, et l'actionneur de retournement (9) est actionné uniquement après la limitation de l'actionneur de pivotement (10) par l'appareil de limitation.

11. Charrue réversible portée (1) selon au moins l'une des revendications précédentes, au moins l'actionneur de pivotement (10) étant conçu comme un actionneur à fluide sous pression et la commande de pivotement de châssis (11) comprenant au moins une vanne de fermeture (16) pour la fermeture de l'approvisionnement en fluide sous pression de l'actionneur de pivotement (10), **caractérisée en ce que** l'actionneur de pivotement (10) est réalisé comme un cylindre à gradins à au moins deux gradins, une vanne de fermeture (16) étant associée à chaque gradin (18a, 18b), laquelle est commutée en fonction de la position de course détectée de l'actionneur de largeur de coupe (6).

12. Charrue réversible portée (1) selon au moins l'une des revendications précédentes, en particulier la revendication 2 ou 4, **caractérisée en ce que,** lors de la disposition du châssis de charrue (3) dans la position de retournement, l'actionneur de largeur de coupe (6) est bloqué, de préférence par le dispositif d'accouplement (13, 17), au moins à l'encontre d'une sortie et/ou d'un réglage d'une largeur de travail plus petite.
